(19) Europäisches Patentamt
European Patent Office
Office européen des brevets

(11) EP 0 587 250 B1

(12) **EUROPEAN PATENT SPECIFICATION**

(45) Date of publication and mention of the grant of the patent:
**14.05.1997 Bulletin 1997/20**

(51) Int Cl.[6]: **C10L 1/22**

(21) Application number: **93202616.4**

(22) Date of filing: **07.09.1993**

(54) **Gasoline compositions**

Benzinzusammensetzungen

Compositions d'essence

(84) Designated Contracting States:
**AT BE CH DE DK FR GB GR IE LI LU NL PT SE**

(30) Priority: **11.09.1992 EP 92308296**

(43) Date of publication of application:
**16.03.1994 Bulletin 1994/11**

(73) Proprietor: **SHELL INTERNATIONALE RESEARCH MAATSCHAPPIJ B.V.**
**2596 HR Den Haag (NL)**

(72) Inventors:
- **van Es, Cornelis**
**Adhisham, Kent CT3 3LG (GB)**
- **Graham, Joseph**
**Wirral, Merseyside L63 0NE (GB)**

(56) References cited:
**EP-A- 0 208 560** **EP-A- 0 400 864**
**EP-A- 0 400 869** **EP-A- 0 457 599**
**EP-A- 0 542 380** **EP-A- 0 545 653**
**WO-A-92/15622** **GB-A- 2 231 873**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a gasoline composition for use in an internal combustion engine and a gasoline additive concentrate.

It is known that during the operation of an internal combustion engine, octane requirement (OR), i.e., the fuel octane number required for knock-free operation, gradually increases with the build-up of deposits in the combustion chamber.

Many additives are known which can be added to hydrocarbon fuels to try to prevent or reduce deposit formation or to remove or modify formed deposits in the combustion chamber and adjacent surfaces, such as valves, ports and spark plugs, in order to reduce octane requirement. Such additives may typically comprise an amine, polyamine, alkanol or polyol attached to a long-chain hydrocarbon polymer (e.g. polyisobutylene) through an acid group (e.g. a dicarboxylic acid group such as a succinic acid group). For example, it is known from GB-A-960,493 to incorporate polyolefin-substituted succinimides of tetraethylene pentamine in gasoline compositions to inhibit deposit formation in internal combustion engine fuel induction systems. The succinimides disclosed correspond to the general formula:

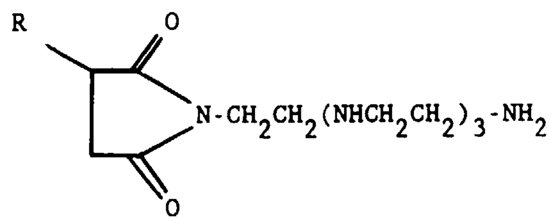

wherein R is derived from a polymer RH of an olefin containing from 2 to 5 carbon atoms, which polymer contains from 30 to 200 carbon atoms. The molecular weight of the radical R is said to range from 400 to 3000, more preferably, 900 to 1200 and is advantageously derived from a polymer of isobutene having a molecular weight of about 1000. In fact, the only example of a polyolefin-substituted succinimide of tetraethylene pentamine is one in which the polyolefin is a polyisobutylene of molecular weight about 1000.

US-A-3,443,918 discloses fuel compositions comprising a major portion of a liquid hydrocarbon boiling in the gasoline boiling range and in an amount sufficient to inhibit deposit formation, a mono- or bis-alkenyl succinimide of a bis- or tris-polymethylene polyamine wherein the alkenyl groups of the succinate moieties contain from about 50 to 250 carbon atoms (i.e. molecular weight of about 700 to 3,500) and are preferably polyisobutenyl groups of molecular weight about 700 to 3500, more preferably 800 to 3200, and wherein the polyamine is of the formula:

$$(NH_2-R-)_s\,N-(-H\ )_t$$

in which R is a polymethylene radical of 4 to 9 carbon atoms, s is 2 to 3, t is 0 to 1 and the sum s+t=3 . The only succinimide compound exemplified is a monoalkenyl succinimide in which the alkenyl group is a polyisobutylene group of average molecular weight 1000.

DE-OLS-3,126,404 discloses gasoline compositions containing a nitrogen composition having detergent properties which is prepared by reacting, in a first step, at least one unsaturated anhydride, e.g. maleic anhydride, with at least one olefin containing at least 10, preferably 20 to 200, carbon atoms (i.e. molecular weight of at least 140, preferably 280 to 2800), whereby the reaction is stopped as soon as at least 20% and maximum 80% of the anhydride has reacted, and, in a second step, reacting the products obtained in the first step with a polyamine of the general formula:

$$H_2N-[-(CH_2)_n-NH-]_m-R'$$

in which R' is a monovalent aliphatic radical with 6 to 30 carbon atoms, n is an integer from 2 to 5 and m is an integer from 1 to 10. The only olefins employed in the examples are polyisobutylene of molecular weight 920 and tetrapropylene of molecular weight 168.

There is no disclosure in any one of GB-A-960,493, US-A-3,443,918 and DE-OLS-3,126,404 of any steps taken to achieve any particular ratio of dicarboxylic acid moieties per polyolefin chain.

EP-A-208,506 discloses an oleaginous composition comprising a fuel or a lubricating oil and, as ashless dispersant,

an amine derivative of an oil additive comprising a hydrocarbyl substituted $C_4$ to $C_{10}$ monounsaturated dicarboxylic acid producing material formed by reacting olefin polymer of $C_2$ to $C_{10}$ monoolefin (e.g. polyisobutylene; PIB) having a molecular weight of from 1500 to 5000 and a $C_4$ to $C_{10}$ monounsaturated acid material (e.g. maleic anhydride; MALA), wherein there are an average of 1.05 to 1.25 dicarboxylic acid producing moieties per molecule of said olefin polymer used in the reaction. All of the Examples 1 to 11 of EP-A-208,560 describe the preparation and testing of lubricating oil compositions only.

It will readily apparent to those skilled in the art that complete reaction of all the polyolefin (e.g. PIB) with the maleic anhydride (MALA) is unattainable in practice, in which case the MALA/PIB ratio in the actual chemical adduct formed will be higher than would be calculated on the basis of total polyolefin originally present in the reaction mixture. Thus, when 80% of the polyolefin is taken up into the product (representing an operationally realistic result) a MALA/PIB ratio of 1.05 to 1.25 based on total polyolefin reactant originally present (i.e. as defined in EP-A-208,560) effectively becomes a product molecular ratio of about 1.3 to 1.5.

It has now surprisingly been found that certain additives, obtained by reacting an amine with polyalkenyl derivatives of dicarboxylic acids having particular combinations of relatively high molecular weight ($M_n$) of their polyalkenyl moieties and low values for the ratio of dicarboxylic acid moieties per polyalkenyl chain, are particularly effective in reducing intake valve deposits when incorporated in gasoline compositions.

Therefore, in accordance with the present invention, there is provided a gasoline composition comprising a major amount of a gasoline and a minor amount of an additive obtained by reacting at least one amine, with a polyalkenyl derivative of a monoethylenically unsaturated $C_4$-$C_{10}$ dicarboxylic acid material in which the ratio of dicarboxylic acid moieties per polyalkenyl chain is not greater than 1.2:1 and the number average molecular weight ($M_n$) of the polyalkenyl chain is in the range from 1600 to 5000.

The amines employed in the instant invention are preferably $C_1$-$C_{30}$, more preferably $C_1$-$C_{18}$ and especially $C_8$-$C_{12}$, amines containing 1 to 8 nitrogen atoms. Such amines may be branched or unbranched, saturated aliphatic, primary or secondary amines, containing 1 to 8 nitrogens, preferably mono- or diamines, such as ethylamine, butylamine, sec. butylamine, diethylamine and 3-dimethylamino-1-propylamine, but including higher polyamines such as alkylene polyamines, wherein pairs of nitrogen atoms are joined by alkylene groups of 2 to 4 carbon atoms. Thus, polyamines of the formula:

$$NH_2(CH_2)_m\text{-}[NH(CH_2)_m]_n\text{-}NH_2 \qquad (I)$$

are included where m is 2 to 4 and n is 0 to 6.

Examples of such polyamines include diethylene triamine, triethylene tetramine, tetraethylene pentamine, pentaethylene hexamine, hexaethylene heptamine, tripropylene tetramine, and corresponding commercial mixtures such as "Polyamine H", "Polyamine 400" and "Polyamine S".

The polyalkenyl derivatives of a monoethylenically unsaturated $C_4$-$C_{10}$ dicarboxylic acid material are known compounds or can be prepared by processes analogous to known processes. Thus, such a derivative may conveniently be prepared by mixing a polyalkene with a specified amount of a monoethylenically unsaturated $C_4$-$C_{10}$ dicarboxylic acid material and passing chlorine through the mixture, e.g. as described in GB-A-949,981. Alternatively, the derivative may be prepared by reacting thermally at an appropriate temperature the polyalkene with a specified amount of the dicarboxylic acid material, e.g. as described in GB-A-1,483,729. A particularly advantageous process for preparing the derivative involves reacting the polyalkene with the dicarboxylic acid material in mol ratio dicarboxylic acid material: polyalkene greater than 1:1, at a temperature in the range 150 to 260°C and in the presence of a polyaddition-inhibiting amount of a sulphonic acid. Such a process is described in EP-A-542,380.

The polyalkene may conveniently be a homopolymer or copolymer, for example of at least one $C_2$-$C_{10}$ monoolefin. Preferably the polyalkene is a polymer of at least one $C_2$-$C_5$ monoolefin, e.g. an ethylene-propylene copolymer. The monoolefin is preferably a $C_3$-$C_4$ olefin and preferred polyalkenes derived therefrom include polyisobutylenes and atactic or isotactic propylene oligomers. Polyisobutylenes such as those sold by the British Petroleum Company under the Trade Marks "Ultravis", "Hyvis" and "Napvis" are particularly preferred for use in the present invention, e.g. "Napvis 120", "Hyvis 75" and "Hyvis 200" polyisobutylenes.

The number average molecular weight, $M_n$, of polyalkenes may be determined by several known techniques which give closely similar results. Thus $M_n$ may be determined for example by modern gel permeation chromatography (GPC), e.g. as described for example in W.W. Yau, J.J. Kirkland and D.D. Bly, "Modern Size Exclusion Liquid Chromatography", John Wiley and Sons, New York, 1979, or by vapour phase osmometry (VPO), or, as in the examples hereinafter, by quantitative reaction with ozone on the assumption that each oligomer chain contains one double bond, as will be readily understood by those skilled in the art.

If old GPC methods are followed, e.g. those described in "Topics in Chemical Instrumentation, Volume XXIX, Gel

Permeation Chromatography" by Jack Cazes, published in The Journal of Chemical Education, Volume 43, numbers 7 and 8, (1966), particularly as specified in US-A-4,234,435, it is likely that values obtained for $M_n$ will be higher than those obtained by the above methods. For example, for materials having $M_n$ in excess of 2000, the values obtained by these old GPC methods may be 10 to 17% higher than those obtained by the said above methods.

The polyalkenes used in the present invention have $M_n$ in the range from 1600 to 5000 by the said above methods, and preferably have $M_n$ of at least 1700, more preferably at least 1800, most preferably at least 1850, up to 4,000, more preferably 3,500, advantageously 3,000, and most preferably 2,500.

$C_4$-$C_{10}$ dicarboxylic acid materials (see for example US-A-4,086,251 and US-A-4,235,786) may for example be anhydrides, e.g. of $C_4$-$C_6$ dicarboxylic acids such as maleic acid, citraconic acid (methylmaleic acid), itaconic acid (methylene succinic acid) and ethylmaleic acid. The $C_4$-$C_{10}$ dicarboxylic acid material is preferably maleic anhydride.

When the $C_4$-$C_{10}$ dicarboxylic acid material is maleic anhydride, the polyalkenyl derivative will be a polyalkenyl succinic acid derivative.

The ratio of dicarboxylic acid moieties per polyalkenyl chain (referred to as "succination ratio" when the dicarboxylic acid material is maleic anhydride), r, may readily be calculated from the following expression:

$$r = \frac{M_n \times AV}{20 \times AM - AV \times M_{DA}}$$

in which:

$M_n$ = Number average molecular weight of the polyalkene
AV = Acid value of the reaction product (meq/g)
AM = Active matter in the reaction product (%w)
$M_{DA}$ = Molecular weight of the dicarboxylic acid material (98 for maleic anhydride)

"Active matter" denotes actual polyalkenyl derivatives of the monoethylenically unsaturated $C_4$-$C_{10}$ dicarboxylic acid material, from which it will be understood that unreacted polyalkene does not contribute to the AM.

Preferably, the ratio of dicarboxylic acid moieties per polyalkenyl chain is in the range 1:1 to 1.2:1, more preferably 1:1 to 1.15:1.

The preparation of the additives used in the gasoline compositions of the present invention is known in the art. Thus, at least one amine is conveniently reacted with the polyalkenyl derivative of the monoethylenically unsaturated $C_4$-$C_{10}$ dicarboxylic acid material in a molar ratio polyalkenyl derivative/amine(s) typically in the range from 1 to 4, preferably from 1.5 to 2.5.

The reaction is conveniently carried out in an organic solvent at a temperature in the range from 100 to 250°C, preferably from 125 to 175°C, advantageously 160°C for between 1 and 10 hours, followed by nitrogen stripping at a similar temperature for about 1 to 5 hours. It is preferred that the reaction takes place in the absence of oxygen - a nitrogen blanket is often used to accomplish this result.

Suitable organic solvents include hydrocarbons such as hexane, cyclohexane, toluene, the xylenes and mineral oils such as those sold by member companies of the Royal Dutch/Shell Group under the designations "HVI" and "XHVI" (Trade Mark).

The amount of additive present in the gasoline composition according to the present invention is in the range preferably from 10 to 1000 ppmw, more preferably from 50 to 500 ppmw, and especially from 100 to 400 ppmw, all ppmw based on the total composition.

The term "gasoline" denotes a liquid hydrocarbon fuel (base fuel) in the gasoline boiling range from 25°C to 232°C, typically comprising a mixture of saturated hydrocarbons, olefinic hydrocarbons and aromatic hydrocarbons. Preferably the base fuel has a saturated hydrocarbon content in the range from 40 to 80 per cent volume, an olefinic hydrocarbon content in the range from 0 to 30 per cent volume and an aromatic hydrocarbon content in the range from 10 to 60 per cent volume. The base fuel can be derived from straight run gasoline, polymer gasoline, natural gasoline, dimer or trimerised olefins, synthetically produced aromatic hydrocarbon mixtures from thermally or catalytically reformed hydrocarbons, or from catalytically cracked or thermally cracked petroleum stocks, or mixtures of these. The hydrocarbon composition and octane level of the haze fuel are not critical. The octane level,(R+M)/2 , will generally be above 85. Any conventional motor base fuel may be employed in the practice of this invention. Thus, in the gasoline, hydrocarbons can be replaced by up to substantial amounts of alcohols, ethers, ketones or esters conventionally known for use in fuels. Naturally, the base fuels are suitably substantially free of water since water may impede a smooth combustion.

The gasoline composition according to the present invention may also contain other additive components or agents. Thus, it can contain a lead compound as anti-knock additive and accordingly, the gasoline composition according to the present invention includes both leaded and unleaded gasoline. The gasoline composition can also contain antioxidants such as phenolics, e.g., 2,6-di-tert-butylphenol or phenylenediamines, e.g., N,N'-di-sec-butyl-p-phenylenediamine; dyes; metal deactivators; dehazers such as polyester-type ethoxylated alkylphenol-formaldehyde resins; corrosion inhibitors, such as a polyhydric alcohol ester of a succinic acid derivative having on at least one of its alpha-carbon atoms an unsubstituted or substituted aliphatic hydrocarbon group having 20 to 500 carbon atoms, for example, pentaerythritol diester of polyisobutylene-substituted succinic acid, the polyisobutylene group having a number average molecular weight of 950; antiknock additives other than lead compounds such as methyl cyclopentadienyl-manganese tricarbonyl or ortho-azidophenol; co-antiknock additives such as benzoylacetone; or carrier fluids such as a polyether e.g. a $C_{12}$-$C_{15}$ alkyl-substituted propylene glycol ("SAP 949" which is available from member companies of the Royal Dutch/Shell group), "HVI" or "XHVI" base oil, or a polyolefin derived from $C_2$-$C_6$ monomers, e.g. polyisobutylene having from 20 to 175, particularly 35 to 150, carbon atoms.

The additive can be added separately to the gasoline or it can be blended with other agents and added to the gasoline together. A preferred method of adding the additive to the gasoline is first to prepare a concentrate of the additive and then to add this concentrate in a calculated, desired amount to the gasoline.

The present invention therefore further provides a method of preparing a gasoline composition of the invention which comprises adding to the gasoline a gasoline additive concentrate comprising a gasoline-compatible diluent and from 20 to 50%w, calculated on the diluent, of an additive obtained by reacting at least one amine, with a polyalkenyl derivative of a monoethylenically unsaturated $C_4$-$C_{10}$ dicarboxylic acid material in which the ratio of dicarboxylic acid moieties per polyalkenyl chain is not greater than 1.2:1 and the number average molecular weight ($M_n$) of the polyalkenyl chain is in the range from 1600 to 5000.

Suitable gasoline-compatible diluents are hydrocarbons and mixtures of hydrocarbons with alcohols or ethers, such as methanol, ethanol, propanol, 2-butoxyethanol or methyl tert-butyl ether. Preferably the diluent is an aromatic hydrocarbon solvent such as toluene, xylene, mixtures thereof or mixtures of toluene or xylene with an alcohol.

The present invention will be further understood from the following illustrative examples, in which the number average molecular weights ($M_n$) of the polyisobutylenes used were, unless otherwise indicated, determined by quantitative reaction with ozone, on the assumption that each oligomer chain contains one double bond, as will be readily understood by those skilled in the art.

Active matter content was determined by separating inactive material from the desired active matter on an aluminium oxide column using diethyl ether as eluant. Acid value was determined in accordance with ASTM D 664.

## Example 1

(i) Preparation of polyisobutenyl derivative of maleic anhydride

"Hyvis 75" (Trade Mark) polyisobutylene (PIB) of number average molecular weight ($M_n$) 1890 was reacted with maleic anhydride as described in GB-A-949,981 to yield a PIB-MALA reaction product having an active matter content of 73.0%w and an acid value of 0.84 milli-equivalents/g (meq/g). This analysis data indicates a succination ratio of 1.15 mol MALA/mol PIB.

(ii) Preparation of reaction product of PIB-MALA and polyamine

The PIB-MALA reaction product obtained in (i) above was reacted in conventional manner with the polyamine, tetraethylene pentamine (TEPA). Thus, TEPA was added to the PIB-MALA at 160°C over a period of one and a half hours (molar ratio PIB-MALA/TEPA of 1.5) and the reactor contents maintained at this temperature for a further hour before stripping with nitrogen to remove all reaction water to yield the desired end product (a succinimide). The amount of TEPA added to the PIB-MALA was 52.9 grams TEPA per kilogram PIB-MALA, which amount was derived from the following formula:

$$Io = \frac{Ma}{2} \times \frac{Ao}{CR}$$

wherein

Io = number of grams of polyamine added per kilogram PIB-MALA
Ma = molecular weight of polyamine (189 for TEPA)
Ao = acid value of PIB-MALA
CR = molar ratio PIB-MALA/polyamine

Examples 2 to 4 and Comparative Examples A to D

Examples 2 to 4 and Comparative Examples A to D were carried out as for Example 1 with variations in the amounts and types of the reagents used, except that in Example 2, step (i) was carried out in a manner analogous to Examples 1 to 8 of EP-A-542,380, and in Example 4 and Comparative Examples A and B, step (i) was carried out in accordance with the teaching of GB-A-1,483,729. The polyamines used, the CR values, and the type and $M_n$ of the polyisobutylenes employed in Examples 2 to 4 and Comparative Examples A to D, as well as the active matter contents, acid values and succination ratios for the intermediate PIB-MALA reaction products obtained in these examples are indicated in Table I below in which the following abbreviations are used:-

TETA : triethylene tetramine
TEPA : tetraethylene pentamine
Polyamine S : a mixture of tetraethylene pentamine, pentaethylene hexamine and hexaethylene heptamine in a molar ratio of 1:2:1.

Table I

| Example No. | Type of PIB | $M_n$ PIB | PIB-MALA | | | Polyamine | CR (mol ratio PIB-MALA/ polyamine |
|---|---|---|---|---|---|---|---|
| | | | Active matter (%w) | Acid value (meq/g) | Succination ratio (no. mol MALA/ mol PIB) | | |
| Comp. A* | "Napvis 10" | 970 | 67.5 | 1.43 | 1.15 | TETA | 1.5 |
| Comp. B* | "Hyvis 30" | 1333 | 65.4 | 1.03 | 1.10 | TEPA | 1.5 |
| 2 | "Hyvis 200" | 2470 | 69.0 | 0.60 | 1.15 | Polyamine S | 1.5 |
| 3 | "Hyvis 75" | 1890 | 73.0 | 0.81 | 1.15 | TEPA | 2.1 |
| 4 | "Napvis 120" | 2470 | 68.4 | 0.58 | 1.0 | Polyamine S | 2.0 |
| Comp. C** | "Hyvis 75" | 1890 | 91.0 | 1.60 | 1.75 | TEPA | 2.0 |
| Comp. D** | "Hyvis 75" | 1890 | 91.0 | 1.60 | 1.75 | TEPA | 1.4 |

* Comp. A and Comp. B are comparative examples as the PIB $M_n$s fall outside the $M_n$ range 1600-5000.
** Comp. C and Comp. D are comparative examples as the succination ratios exceed 1.2

Example 5

Each of the end products (succinimides) obtained in Examples 1 to 3 and Comparative Examples A to D was tested for intake valve cleanliness performance in the Volkswagen (VW) Polo Road Test. The tests were carried out using unleaded gasoline containing, based on total composition, 80 ppmw active succinimide and, as carrier fluid:

(i) 200 ppmw "HVI" base oil being a 1 : 1 mixture of "HVI 60" base oil (a bright and clear high viscosity index base oil having viscosity at 100°C of 4.4 to 4.9 $mm^2/s$ (ASTM D 445), flashpoint of 204°C (ASTM D 93) and pour point of -15 to -18°C (ASTM D 97)) and "HVI 160" base oil (a bright and clear high viscosity index base oil having viscosity at 100°C of 10.7 to 11.8 $mm^2/s$ (ASTM D 445), flashpoint of 228°C (ASTM D 93) and pour point of -9°C (ASTM D 97)); or

(ii) 250 ppmw polyoxypropylene glycol hemiether (monoether) prepared using a mixture of $C_{12-15}$ alcohols as initiator, and having $M_n$ in the range 1200 to 1500 and a kinematic viscosity in the range 72 to 82 $mm^2/s$ at 40°C according to ASTM D 445, available under the trade designation "SAP 949" from member companies of the Royal Dutch/Shell group.

In this test, a standard VW vehicle fitted with a carburettored engine of 1043cc capacity and equipped with a small wind-board fixed to the roof to increase wind resistance and thereby increase vehicle load, was operated for 5000 km on the test gasoline composition. Before the test started, deposits were removed from the cylinder head, intake manifold, piston tops and combustion chambers, and new intake valves were weighed and installed. The oil and filter were

changed and new spark plugs were installed. A 37 minute test cycle was employed. It consisted of driving the vehicle in 4th gear at 4500 rpm (65 mph or 104.6 km/h) for 30 minutes and then allowing the vehicle to run at idle for 7 minutes. Twelve complete cycles were carried out in one day before a rest period and this was repeated on consecutive days for a total of 8 days (see Table II below).

Table II

| VW Polo Road Test | | | |
|---|---|---|---|
| Test Cycle | Duration (mins) | Speed (rpm) | Power (kw) |
| Stage 1 | 30 | 4500 | 22 |
| Stage 2 | 7 | idle | - |
| Test duration = 60 hours No. of test cycles = 96 Test distance = 5000 km | | | |

At the end of the test, the intake valves were removed and weighed. Tables III and IV which follow show the average of 4 intake valve deposit weights for each test composition.

Table III

| Gasoline composition containing 250 ppmw "SAP 949" hemiether and 80 ppmw succinimide of | $M_n$ PIB | Succination ratio (no. mol MALA/ mol PIB) | Average intake valve deposit weight (mg) |
|---|---|---|---|
| Comp. Ex. A | 970 | 1.15 | 580 |
| Comp. Ex. B | 1333 | 1.10 | 238 |
| Ex. 1 | 1890 | 1.15 | 62 |
| Ex. 2 | 2470 | 1.15 | 68 |

Table IV

| Gasoline composition containing 200 ppmw "HVI" base oil and 80 ppmw succinimide of | $M_n$ PIB | Succination ratio (no. mol MALA/ mol PIB) | Average intake valve deposit weight (mg) |
|---|---|---|---|
| Ex. 1 | 1890 | 1.15 | 184 |
| Comp. Ex. D | 1890 | 1.75 | 685 |
| Ex. 3 | 1890 | 1.15 | 173 |
| Comp. Ex. C | 1890 | 1.75 | 626 |

It can clearly be seen from the test results in Tables III and IV above that the gasoline compositions according to the present invention produced considerably fewer deposits than the comparative gasoline compositions and, accordingly, show significantly improved engine performance relative thereto.

Example 6

In this example, an unleaded gasoline containing, based on total composition, 300 ppmw of a 40% w/w solution in xylene of the end product (succinimide) of Example 4 (120 ppmw active matter) and, as carrier fluid, 300 ppmw "SAP 949" hemiether was tested in the Volkswagen (VW) Polo Road Test as described in Example 5. The results obtained are given in Table V following.

Table V

| Test run | Additive concentration (ppmw) | | Average intake valve deposit weight (mg) |
|---|---|---|---|
| | Solution of Example 4 succinimide | "SAP 949" hemiether | |
| 1 | - | - | 387 |
| 2 | 300 | 300 | 44 |

The test results in Table V demonstrate the excellent engine performance of the gasoline composition containing the succinimide of Example 4, being a composition in accordance with the present invention.

## Claims

1. A gasoline composition comprising a major amount of a gasoline and a minor amount of an additive obtained by reacting at least one amine, with a polyalkenyl derivative of monoethylenically unsaturated $C_4$-$C_{10}$ dicarboxylic acid material in which the ratio of dicarboxylic acid moieties per polyalkenyl chain is not greater than 1.2:1 and the number average molecular weight ($M_n$) of the polyalkenyl chain is in the range from 1600 to 5000.

2. A gasoline composition according to claim 1, wherein the ratio of dicarboxylic acid moieties per polyalkenyl chain is in the range 1:1 to 1.15:1.

3. A gasoline composition according to claim 1 or claim 2, wherein the polyalkenyl chain has $M_n$ in the range from 1700 to 3500.

4. A gasoline composition according to any one of claims 1 to 3, wherein the polyalkenyl chain has $M_n$ in the range from 1800 to 2500.

5. A gasoline composition according to any one of the preceding claims, wherein the polyalkenyl chain is derived from a polymer of at least one $C_2$-$C_5$ monoolefin.

6. A gasoline composition according to claim 5, wherein the monoolefin is isobutylene.

7. A gasoline composition according to any one of the preceding claims, wherein the amine is a compound of the general formula:

$$NH_2(CH_2)_m\text{-}[NH(CH_2)_m]_n\text{-}NH_2 \qquad (I)$$

where m is 2 to 4 and n is 0 to 6.

8. A gasoline composition according to any one of the preceding claims, wherein the amount of additive is in the range from 10 to 1000 ppmw based on total composition.

9. A gasoline composition according to any one of the preceding claims, wherein the amount of additive is in the range from 50 to 500 ppmw based on total composition.

10. A method of preparing a gasoline composition according to any one of Claims 1 to 9 which comprises adding to the gasoline a gasoline additive concentrate comprising a gasoline-compatible diluent and from 20 to 50%w, calculated on the diluent, of an additive obtained by reacting at least one amine, with a polyalkenyl derivative of a monoethylenically unsaturated $C_4$-$C_{10}$ dicarboxylic acid material in which the ratio of dicarboxylic acid moieites per polyalkenyl chain is not greater than 1.2:1 and the number average molecular weight ($M_n$) of the polyalkenyl chain is in the range from 1600 to 5000.

## Patentansprüche

1. Benzinzusammensetzung mit einem Gehalt an einer Hauptmenge eines Benzins und einer Nebenmenge eines Additivs, das durch Umsetzen wenigstens eines Amins mit einem Polyalkenylderivat von monoethylenisch ungesättigtem $C_4$-$C_{10}$-Dicarbonsäurematerial erhalten worden ist, worin das Verhältnis von Dicarbonsäureresten je Polyalkenylkette nicht größer als 1,2:1 ist und das zahlenmittlere Molekulargewicht ($M_n$) der Polyalkenylkette im Bereich von 1600 bis 5000 liegt.

2. Benzinzusammensetzung nach Anspruch 1, worin das Verhältnis von Dicarbonsäureresten je Polyalkenylkette im Bereich 1:1 bis 1,15:1 liegt.

3. Benzinzusammensetzung nach Anspruch 1 oder Anspruch 2, worin die Polyalkenylkette ein $M_n$ im Bereich von 1700 bis 3500 aufweist.

4. Benzinzusammensetzung nach einem der Ansprüche 1 bis 3, worin die Polyalkenylkette ein $M_n$ im Bereich von 1800 bis 2500 aufweist.

5. Benzinzusammensetzung nach einem der vorstehenden Ansprüche, worin die Polyalkenylkette von einem Polymer aus wenigstens einem $C_2$-$C_5$-Monoolefin abgeleitet ist.

6. Benzinzusammensetzung nach Anspruch 5, worin das Monoolefin Isobutylen ist.

7. Benzinzusammensetzung nach einem der vorstehenden Ansprüche, worin das Amin eine Verbindung der allgemeinen Formel:

$$NH_2(CH_2)_m\text{-}[NH(CH_2)_m]_n\text{-}NH_2 \qquad (I)$$

ist, worin m 2 bis 4 bedeutet und n für 0 bis 6 steht.

8. Benzinzusammensetzung nach einem der vorstehenden Ansprüche, worin die Additivmenge im Bereich von 10 bis 1000 Gew.-Teile pro Million, bezogen auf die Gesamtzusammensetzung, liegt.

9. Benzinzusammensetzung nach einem der vorstehenden Ansprüche, worin die Additivmenge im Bereich von 50 bis 500 Gew.-Teile pro Million, bezogen auf die Gesamtzusammensetzung, liegt.

10. Verfahren zur Herstellung einer Benzinzusammensetzung nach einem der Ansprüche 1 bis 9, welches ein Zusetzen eines Benzinadditivkonzentrats, umfassend ein benzinverträgliches Verdünnungsmittel und 20 bis 50 Gew.-%, bezogen auf das Verdünnungsmittel, eines Additivs, zu dem Benzin umfaßt, welches Additiv durch Umsetzen wenigstens eines Amins mit eine Polyalkenylderivat eines monoethylenisch ungesättigten $C_4$-$C_{10}$ Dicarbonsäurematerials erhalten worden ist, worin das Verhältnis von Dicarbonsäureresten je Polyalkenylkette nicht größer als 1,2:1 ist und das zahlenmittlere Molekulargewicht ($M_n$) der Polyalkenylkette im Bereich von 1600 bis 5000 liegt.

## Revendications

1. Composition d'essence comprenant une quantité importante d'une essence et une petite quantité d'un additif obtenu en faisant réagir au moins une amine avec un dérivé polyalcénylique d'une matière d'acide dicarboxylique en $C_4$-$C_{10}$ monoéthyléniquement insaturée dans lequel le rapport des fragments d'acide dicarboxylique par chaîne polyalcényle n'est pas supérieur à 1,2/1 et le poids moléculaire moyen numérique ($M_n$) de la chaîne polyalcényle est dans la gamme de 1600 à 5000.

2. Composition d'essence suivant la revendication 1, dans laquelle le rapport des fragments d'acide dicarboxylique par chaîne polyalcényle est dans la gamme de 1/1 à 1,15/1.

3. Composition d'essence suivant l'une ou l'autre des revendications 1 et 2, dans laquelle la chaîne polyalcényle a un $M_n$ dans la gamme de 1700 à 3500.

4. Composition d'essence suivant l'une quelconque des revendications 1 à 3, dans laquelle la chaîne polyalcényle a un $M_n$ dans la gamme de 1800 à 2500.

5. Composition d'essence suivant l'une quelconque des revendications précédentes, dans laquelle la chaîne polyalcényle provient d'un polymère d'au moins une monooléfine en $C_2$-$C_5$.

6. Composition d'essence suivant la revendication 5, dans laquelle la monooléfine est de l'isobutylène.

7. Composition d'essence suivant l'une quelconque des revendications précédentes, dans laquelle l'amine est un composé de la formule générale :

$$NH_2(CH_2)_m\text{-}[NH(CH_2)_m]_n\text{-}NH_2 \quad (I)$$

dans laquelle m vaut de 2 à 4 et n vaut de 0 à 6

**8.** Composition d'essence suivant l'une quelconque des revendications précédentes, dans laquelle la quantité d'additif se situe dans la gamme de 10 à 1000 ppm en poids par rapport à la composition totale.

**9.** Composition d'essence suivant l'une quelconque des revendications précédentes, dans laquelle la quantité d'additif se situe dans la gamme de 50 à 500 ppm en poids par rapport à la composition totale.

**10.** Procédé de préparation d'une composition d'essence suivant l'une quelconque des revendications 1 à 9, qui consiste à ajouter à l'essence un concentré d'additif pour essence comprenant un diluant compatible avec l'essence et de 20 à 50%, calculés par rapport au diluant, d'un additif obtenu en faisant réagir au moins une amine avec un dérivé polyalcénylique d'une matière d'acide dicarboxylique en $C_4$-$C_{10}$ monoéthyléniquement insaturée dans lequel le rapport des fragments d'acide dicarboxylique par chaîne polyalcényle n'est pas supérieur à 1,2/1 et le poids moléculaire moyen numérique ($M_n$) de la chaîne polyalcényle est dans la gamme de 1600 à 5000.